# EUROPÄISCHE PATENTANMELDUNG

(11) **EP 0 523 814 A1**
(43) Veröffentlichungstag der Anmeldung: **20.01.1993**
(21) Anmeldenummer: 92202310.6
(22) Anmeldetag: 14.07.1992
(51) Int. Cl.: B61F 7/00, B61C 13/00, B61D 3/18

(54) **Universelle Schienenfahreinrichtung**

(30) Priorität: 15.07.1991 DE 4123397
(71) Anmelder: SPEZIALFAHRZEUGAUFBAU UND KABELTECHNIK GmbH, D-06116 Halle (DE)
(72) Erfinder: Hofmann, Gotthardt, O-4020 Halle (DE); Jähnsch, Günter, O-4070 Halle (DE); Münch, Jürgen, O-4050 Halle (DE)
(74) Vertreter: Hentschel, Ulrich, Dr.

(57) **Zusammenfassung**

Zur Verkürzung des Zeit- und Kostenaufwandes und zur Erhöhung der Flexibilität der universellen Schienenfahreinrichtung sind an eine Schweißgrundkonstruktion (3) mittels Adapter, ausgebildet als Flansch entsprechend der erforderlichen Spurbreite, die notwendigen Baugruppen (1, 2) zu montieren. Der Einsatz der universellen Schienenfahreinrichtung ist auf allen Gleisanlagen möglich.

## Beschreibung

Die Erfindung betrifft eine universelle Schienenfahreinrichtung, die dazu dient, Straßenfahrzeuge schienengebunden zu verfahren.

Die bekannten Schienenfahreinrichtungen haben den Nachteil, daß sie auf eine Schienenbreite fest fixiert sind. Die Umstellung auf andere Schienenbreiten ist nur mit einer kompletten Demontage der Einrichtung und einer neuen Montage, wiederum einer fest fixierten Schienenbreite, möglich.

Der Erfindung liegt die Aufgabe zugrunde, an eine Universal-Grundkonstruktion, die alle Hub- und Senkvorgänge übernimmt, wahlweise Baugruppen für unterschiedliche Schienenbreiten zu montieren. Durch den Einsatz der Baugruppen ist eine rationelle Umrüstung sowohl zeitlich als auch kostenmäßig gegeben. Zu diesem Zweck ist die Grundkonstruktion erfindungsgemäß dadurch verändert worden, daß über einen Zwischenflansch, der die Funktion eines Adapters ausübt, die Baugruppen der unterschiedlichsten Spurbreiten kurzfristig montiert bzw. demontiert werden können. Diese Variabilität ist vorteilhaft beim Einsatz der Fahrzeuge auf unterschiedlichen Spurbreiten. Durch das Lösen von jeweils 6 Stück Innensechskantschrauben kann jede Baugruppe abgenommen und durch eine andere ersetzt werden. Beim Einsatz von Fahrmotoren auf hydrostatischer Basis erfolgt die Kupplung der Volumenströme durch handelsübliche Schnellverbinder.

Weitere Einzelheiten der universellen Schienenfahreinrichtung für Straßenfahrzeuge ergeben sich aus der Zeichnung, in welcher bevorzugte Ausführungsformen dargestellt sind.

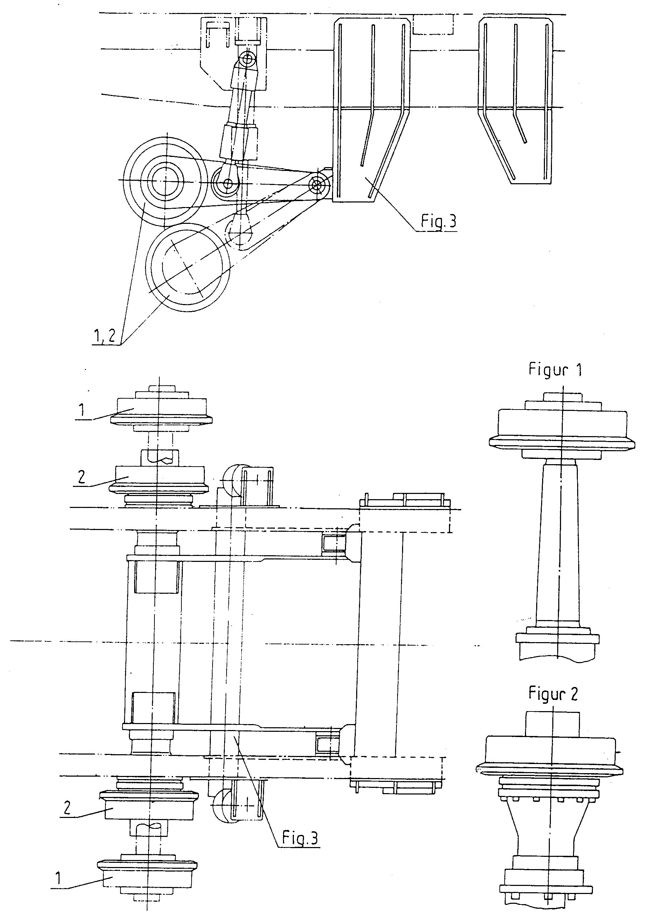

- Figur 1: Ansicht der Baugruppe Spurbreite 1435 mm, bestehend aus einem Achsstumpf mit Paßflansch und aufgesetzem Spurrad (beim Einsatz der Fahrzeuge auf Spurbreiten um 1435 mm erfolgt der Antrieb nach dem Reibradprinzip über die Hinterachse des Fahrzeuges)
- Figur 2: Ansicht der Baugruppe Spurbreite 1000 mm, bestehend aus dem hydrostatischen Fahrmotor, welcher mittels Flansch am Adapter des Grundgerüstes mit 6 Stück Sechskantschrauben montiert wird. Der Fahrmotor übernimmt den Antrieb zur Vorwärtsbewegung auf der Schiene. Die Bremsvorgänge werden durch eine im Fahrmotor integrierte Lamellenbremse erzeugt.
- Figur 3: Ansicht der Baugruppe Schweißkontruktion, ausgebildet als Schwinge, befestigt am Fahrzeugrahmen und angehoben oder abgesenkt über zwei doppelt wirkende Arbeitszylinder, die von der bordeigenen Druck erzeugerquelle bedient werden. Der an der Schweißkonstruktion befestigte Flansch übernimmt die Funktion des Adapters zur Montage der jeweils notwendigen Baugruppe entsprechend der zu befahrenden Schienenbreite.

Wie aus der Zeichnung der Figuren 1 bis 3 ersichtlich ist, besteht die universelle Schienenfahreinrichtung aus zusammenschraubbaren Baugruppen.

Die Erfindung ist dadurch gekennzeichnet, daß beim Einsatz der unterschiedlichen Spurbreiten die Grundkonstruktion durch Montage von Bauteilen 1,2 über Adapter für unterschiedliche Breiten variabel gestaltet wird. Die Grundkonstruktion bleibt Bestandteil des Fahrzeuges und es erfolgt durch Lösen der Innensechskantschrauben ein Austausch der Bauteile 1 gegen 2 bzw. umgedreht. Dadurch ist ein variabler Einsatz durch kostengünstig rationellere Umrüstung möglich.
Die universelle Schienenfahreinrichtung ist generell auf allen Gleisanlagen möglich. Bevorzugtes Einsatzgebiet der Erfindung sind die Gleisanlagen des innerstädtischen Verkehrs.

## Patentansprüche

1. Universelle Schienenfahreinrichtung, dadurch gekennzeichnet, daß die Grundkonstruktion (3) durch Montage von Bauteilen (1, 2) über Adapter für unterschiedliche Breiten variabel gestaltet wird.
